# EUROPEAN PATENT APPLICATION

(11) **EP 2 206 915 A2**
(43) Date of publication of application: **14.07.2010**
(21) Application number: 09180415.3
(22) Date of filing: 22.12.2009
(51) Int. Cl.: F03D 1/02, F03D 1/04, F03D 3/04

(54) **Wind generator**

(30) Priority: 25.12.2008 RU 2008151669; 06.03.2009 GB 0903960
(71) Applicant: Altenergy Ltd, Oxford Oxfordshire OX2 7DL (GB)
(72) Inventor: Dudnikov, Sergey Yuryevich, 199397 St. Petersburg (RU); Izmailov, Rudolf Alexandrovich, 194223 St. Petersburg (RU); Khoroshev, Yevgeny Nikolayevich, 195253 St. Petersburg (RU)
(74) Representative: Marchant, Michael John

(57) **Abstract**

The wind generator includes a wind turbine installed within the working channel in a common block with the diffuser and the converging nozzle section, connected via a revolving shaft to an electric generator, and the guiding plates for forcing to the wind current into rotation at a specific angle. For increasing the effectiveness of collection of wind power (wind efficiency) the wind turbine is equipped with an end fairing, which can be made in various shapes, for example, in the form of two cones, facing each other by bases, and installed in relation to the diffuser in such a way that an annular diagonal channel is formed with a possibility of movement in relation to the diffuser along its longitudinal axis; the guiding plates are installed at the entrance into the converging nozzle section and the electric generator is placed in the end fairing.

## Description

Useful model relates to the wind-power engineering, namely to the devices for the obtaining electrical power by nontraditional methods. For obtaining electrical power this wind generator uses wind force.

There is a known wind power plant, which contains a turbine, kinematically connected with the energy converter (generator) and mounted in the housing with an air inlet device and a guiding device (diffuser), made in the form of an air duct connected with a motorised rotary air inlet (SU, the certificate of authorship of Nº 1783144, F03D 3/04, published 23.12.1992 g.). The plant is equipped with the additional guiding devices, whose air ducts are connected with the housing, and air inlet device is made in the form of a diffuser, located in the housing, connected with it air ducts and motorised rotary exhaust ducts, in this case the inlets of air ducts have a form of a truncated cone, and the outlets of branch pipes are oriented to the side, opposite to the air inlets.

The drawbacks of this plant are unwieldiness and complexity of construction, and high cost of manufacturing. Branching and the large length of air channels results in significant loss of energy of the wind current due to aerodynamic resistance at high speed. The need for synchronous control of the air intake and output devices is caused by the design and operational complexity of using electric devices for automatic control and using electric power for supporting the functioning of the plant. Another deficiency is the fact that this plant cannot be used for generation of energy at small power scale.

The closest to the declared useful model is the wind power unit, which has a wind turbine in the working channel with the converging nozzle section at the entrance and the diffuser at the output, kinematically connected with a revolving shaft with the electric generator located outside of the unit (RU, the patent of Nº 2156885, F03D 3/04, published 27.09.2000 g.). The wind turbine is established in the working channel in the common block with the diffuser and the converging nozzle section. On its axis a conical air separator is installed, it has guiding plates rigidly fixed on its surface for forcing to the wind current into rotation at a specific angle.

A deficiency of that power unit is in the fact that with the use of the wind turbine, installed in the working channel in the common block with the diffuser and the converging nozzle section, and the presence on its axis of the conical divider of air with those rigidly fixed on its surface guiding plates does not ensure a high speed of the wind current in the working channel, thereby negatively affecting effectiveness of collecting the wind energy (wind efficiency). Furthermore, location of electric generator outside the unit requires the use in the working channel of different parts, for example a conical cogwheel pair, which changes the direction of shaft from the horizontal to the vertical. This leads to an increase in the resistance to the wind current in the working channel, and, therefore, to reduction in its speed.

The useful model is based on the requirement to increase the velocity of the wind current in the working channel of wind generator, which will result in higher effectiveness of collection of wind power (wind efficiency).

This technical result is achieved by the design where the wind generator, which includes the wind turbine installed within the working channel in the common block with the diffuser and the converging nozzle section, connected by a revolving shaft with the electric generator, and the guiding plates for forcing to the wind current into rotation at a specific angle, is equipped with the end fairing, which can be made in various shapes, for example, in the form of two cones, facing each other by their bases, and installed in relation to the diffuser in such a way that an annular diagonal channel is formed with a possibility of movement in relation to the diffuser along its longitudinal axis; the guiding plates are installed at the entrance into the converging nozzle section and the electric generator is placed in the end fairing.

The presence of the end fairing, which can be made in various shapes, for example, in the form of two cones, facing each other by their bases, and installed in relation to the diffuser in such a way that an annular diagonal channel is formed and movement along its longitudinal axis is possible; and installation of the guiding of plates at the entrance into converging nozzle section and placing the electric generator in the end fairing provides an increase in the velocity of the wind current in the working channel of wind generator, thereby increasing the effectiveness of the collection of wind power (wind efficiency).

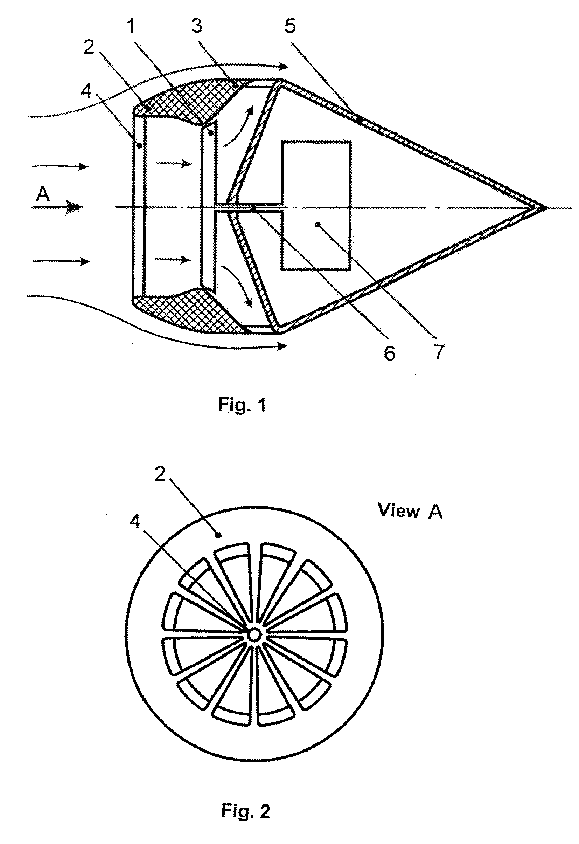

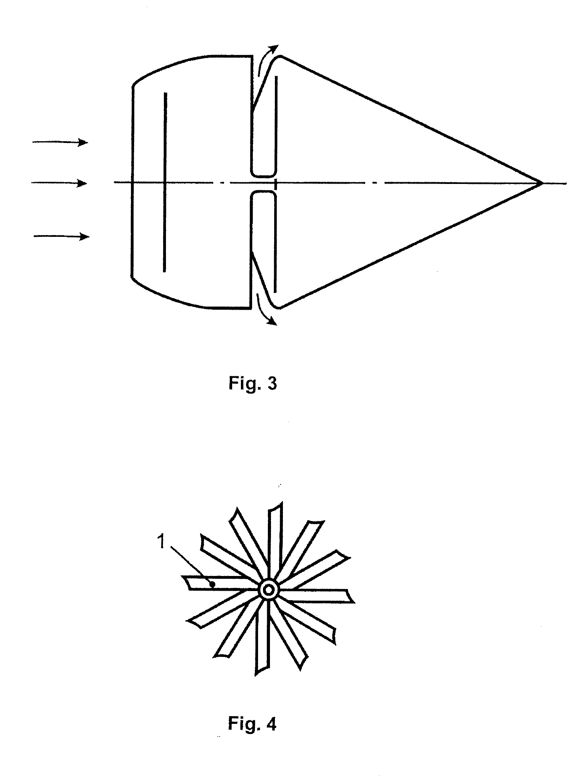

The essence of the useful model is explained with the help of the following drawings. Fig.1 shows the longitudinal section of the wind generator; Fig.2 shows the view specified by arrow "A" on Fig. 1; Fig.3 shows the side view of the wind generator; Fig.4 shows wind turbine.

The wind generator contains the wind turbine 1, installed in the working channel in the common block with converging nozzle section 2 and diffuser 3, the guiding plates 4 for forcing the wind current into rotation at the specific angle, and the end fairing 5, which can be made in various shapes, for example, in the form of two cones, facing each other by their bases. The guiding plates 4 are installed at the entrance into converging nozzle section 2. The wind turbine is connected by a revolving shaft 6 to the electric generator 7. The end fairing 5 is placed to diffuser 3 in such a way that an annular diagonal channel is formed and movement is along its longitudinal axis is possible. Movement of the end fairing 5 in relation to diffuser 3 ensures optimization of the parameters of wind generator Electric generator 7 is placed in end fairing 5. The rotor (not shown) of electric generator 7 is fixed to the revolving shaft 6, the stator (not shown) is connected to the end fairing 5.

The wind generator works as follows. The surrounding air passes guiding plates 4 installed at the entrance into converging nozzle 2 and, after obtaining rotary motion, it enters into converging nozzle 2 where, due to the decrease of the section of converging nozzle 2 it acquires faster rotation and becomes a high-speed revolving air flow which reaches the blades of wind turbine 1. On contact with the blades of wind turbine 1, the air flow sets the turbine into rotation, thereby setting into rotation the rotor fixed on shaft 6 in relation to the stator fixed on end fairing 5. The airflow, after passing wind turbine 1, enters the diffuser 3. Because of the presence of the annular diagonal channel, formed by the end fairing 5 and the diffuser 3, rarefaction is created in the space after the blades of the wind turbine 1 which ensures rapid withdrawal of the exhaust air flow from diffuser 3, thereby increasing the air velocity in the working channel. Optimization of the parameters of wind generator is accomplished by movement of end fairing 5 along the longitudinal axis in relation to diffuser 3. The end fairing 5, which can be made in various shapes, for example, in the form of two cones, facing each other by their bases, serves not only for formation of the annular diagonal channel, but also ensures elimination of stall effects.

The construction of the wind generator increases effectiveness of collection of wind power (wind efficiency) to 34-37% with different speeds of wind (from 1 m/s to 15 m/s). The construction is safe in operating conditions for the service personnel and random birds, it has a lower level of noise and does not have low-frequency acoustic fluctuations. The wind generator can be installed on the building roofs close to the end users of the produced electrical energy.

### FORMULA OF THE USEFUL MODEL

The wind generator, which includes a wind turbine installed within the working channel in a common block with the diffuser and the converging nozzle section, connected via a revolving shaft to an electric generator, and the guiding plates for forcing to the wind current into rotation at a specific angle, differs from the known patented wind generators with internal wind turbine, converging nozzle and diffuser by the fact that it is equipped with the end fairing, which can be made in various shapes, for example, in the form of two cones, facing each other by their bases, and installed in relation to the diffuser in such a way that an annular diagonal channel is formed with a possibility of movement in relation to the diffuser along its longitudinal axis; the guiding plates are installed at the entrance into the converging nozzle section and the electric generator is placed in the end fairing.

## Claims

1. A generator powered in use by incident air flow, comprising a housing, a turbine rotatable in the housing about an axis, and guiding means operable to direct incident air flow onto said turbine, said housing defining a diffuser surface downstream of said turbine, and said generator further comprising an end fairing defining a surface which, together with said diffuser surface, defines a channel directed substantially conically with respect to said axis, said end fairing being movable axially relative to said housing thus enabling expansion or constriction of said channel.

2. A generator in accordance with claim 1 wherein said guiding means comprises a plurality of guiding plates positioned at a converging nozzle section of said housing, upstream of said turbine.

3. A generator in accordance with claim 1 or claim 2 wherein said diffuser surface is substantially concave, and said surface of said end fairing is substantially convex.

4. A generator in accordance with claim 3 wherein said diffuser surface is substantially conical.

5. A generator in accordance with any preceding claim wherein said surface defined by said end fairing is substantially conical.

6. A generator in accordance with claim 5 wherein said end fairing comprises two substantially conic portions, a first portion, on which said surface is defined, having its apex upstream in use of said surface and a second portion being oppositely directed to said first portion and downstream thereof in use.

7. A generator in accordance with any preceding claim wherein said end fairing is of a shape which comprises a solid of revolution about said axis along which said end fairing is movable.
